Europäisches Patentamt

European Patent Office

Office européen des brevets

(11) Publication number: **0 207 574 B1**

# EUROPEAN PATENT SPECIFICATION

(45) Date of publication of patent specification: **21.08.91**

(21) Application number: **86201155.8**

(22) Date of filing: **01.07.86**

(51) Int. Cl.⁵: **A23G 9/28, A23G 3/02, B26D 1/08, B26D 7/18, B28B 11/16, B29C 69/00**

(54) A method and an apparatus for cutting an elongated strand of a soft confection material.

(30) Priority: **02.07.85 GB 8516674**

(43) Date of publication of application:
**07.01.87 Bulletin 87/02**

(45) Publication of the grant of the patent:
**21.08.91 Bulletin 91/34**

(84) Designated Contracting States:
**AT BE CH DE FR GB IT LI NL SE**

(56) References cited:
WO-A-82/00970          FR-A- 1 205 072
FR-A- 2 078 164        FR-A- 2 493 210
GB-A- 733 656          GB-A- 742 644
US-A- 4 037 501        US-A- 4 356 744
US-A- 4 421 591

(73) Proprietor: **UNILEVER NV**
**Burgemeester s'Jacobplein 1 P.O. Box 760**
**NL-3000 DK Rotterdam(NL)**
(84) Designated Contracting States:
**BE CH DE FR IT LI NL SE AT**

Proprietor: **UNILEVER PLC**
**Unilever House Blackfriars P.O. Box 68**
**London EC4P 4BQ(GB)**
(84) Designated Contracting States:
**GB**

(72) Inventor: **Biggs, Donald Reginald**
**'New Hazeldene' 49 Mill Road**
**Sharnbrook Beds. MK44 1LR(GB)**

(74) Representative: **Keppels, Willem Richard Engelbertus Gerardus, Drs. et al**
**Unilever N.V. Patent Division P.O.Box 137**
**NL-3130 AC Vlaardingen(NL)**

## Description

The invention relates to a method for cutting an elongated strand of a soft fluid confection material, such as ice cream, which is lying on a conveyor belt, into separate portions by forcing a cutting means into the strand and thereafter removing it. Such a method is described in GB-A-742,644. A problem involved with this cutting method is the fluidity of the confection material, such as not yet hardened ice cream, so that the material will fill the cut just formed.

To prevent the portions from reuniting it is known in the art to use a relatively thick cutting means so that the portions are farther spaced apart. As an example of such thick cutting means a heated tube as described in GB-A-733,656 can be mentioned. The thickness of such cutting means is however limited because it will inevitably cause a distortion of the portions which will increase with an increasing thickness of the cutting means. Another solution for this problem is described in the same document on page 3, lines 74 to 85: right after the cutting action the extrusion means is retracted and moved away from the cut portion, thereby creating a larger space between the subsequent portions. However, this method requires a complicated apparatus and control thereof and is involved with problems of momentum if heavy extrusion nozzles are to be used.

Consequently there is a continuing need for a simple and reliable method and apparatus for cutting an elongated strand of a soft fluid confection material, such as ice cream, as hereinbefore described. The object of the invention is to provide such a method and apparatus therefore resulting in neatly cut portions of fluid soft confection material lying separated on a conveyor belt.

The invention provides thereto a method as described, which is characterised in that two cutting blades in generally parallel directions are forced into the strand at a distance which is small as compared with the length of each portion and the material between these blades is removed from the conveyor belt either simultaneously with these cutting means or before their removal.

In a preferred embodiment the material on the conveyor belt between the cutting blades is removed by suction, enabling a fast action of the apparatus.

Using cutting blades is convenient because the cut ends may then be supported by the blades until the material between the blades is removed. Suitably the cutting blades are moved simultaneously, enabling the use of common actuators.

The invention also relates to an apparatus for executing the method as just defined, comprising an elongate movable conveying means, an extrusion means for extruding an elongated strand of soft confection material onto the conveying means and a cutting means movable in a direction transverse to the length of the conveying means. This type of apparatus is described in the above mentioned GB-A-733,656.

For suitably performing the method as just defined it is characterised in that the cutting means comprises a pair of generally parallel blades and that means are arranged for removing material from the conveyor belt between the cutting blades.

In a preferred embodiment suction means are arranged for removing material from the conveyor belt between the cutting blades in a quick and reliable manner.

In a preferred embodiment the blades are combined to form a unit and particularly the blades form part of a suction mouth of the suction means.

In this connection may be pointed at a document from an entirely different area of industry, namely the manufacture of building or constructional materials. FR-A-2,493,210 describes a method and an apparatus for cutting elongate compound materials comprising a rigid plate, e.g. of metal, an insulating intermediate layer of synthetic resin foam and a flexible impervious coating, being provided before being cut with lateral grooves and flanges. Because of this complex profile and the combination of different materials deformation during cutting is a problem. This problem is solved by using several complicated cutting means, each for cutting different parts of the compound material. This document is not involved with soft, ice-cream-like material, the material to be cut is not lying on an elongate conveyor belt and the problem to be solved is not reuniting of the cut portions.

The invention will be exemplified in the following description with reference to the accompanying drawings in which

Fig. 1 is a schematic representation of an apparatus according to the invention shown in perspective and

Fig. 2 is a detail of said apparatus.

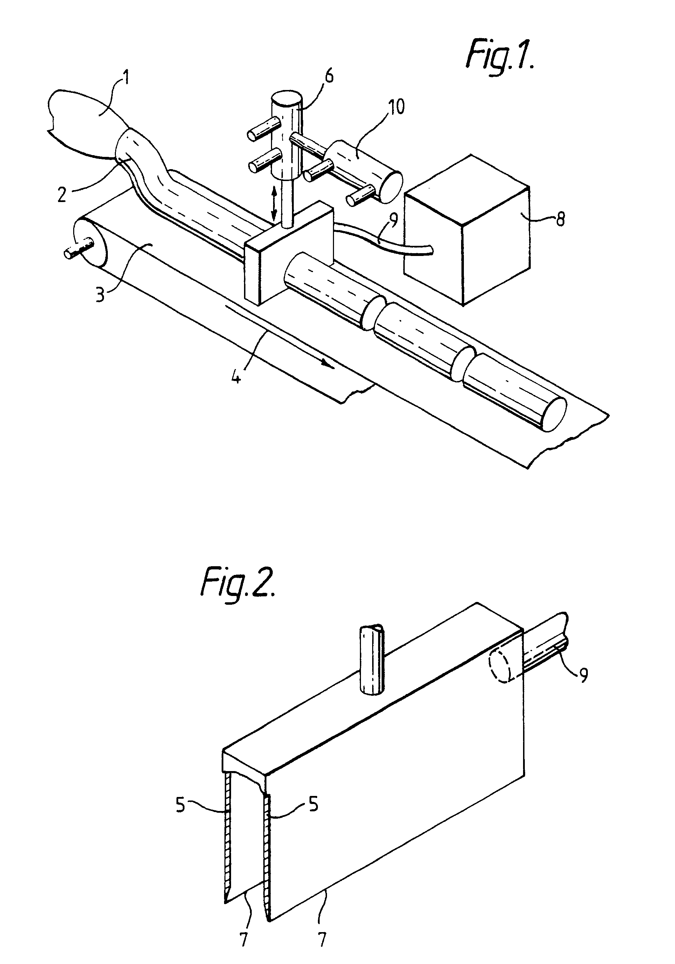

Referring to Fig. 1, an extrusion nozzle 1 is shown, delivering an elongated strand 2 of ice-cream onto a running conveyor belt 3. At some distance from the extrusion nozzle in the conveying direction in the direction of the arrow 4, a pair of transverse cutting blades 5 is arranged, which blades are mutually parallel and at a distance of about 1/2 cm.

These blades are forced into the strand 2 lying on the conveyor belt 3 by actuating the hydraulic cylinder 6 until the belt is touched by the cutting edges 7 (shown in broken lines).

The suction device 8 is actuated, whereby material between the blades 5 is sucked away through the hose 9. Subsequently the blades are removed from the moving strand 2. In order to have a neat cut and to prevent stopping of the production machine, the cutting blades are moving in the same direction and at the same speed as the conveyor. For enabling this, a hydraulically driven actuator 10 may be arranged.

Fig. 2 shows a pair of cutting blades 5 which are united to form a unit and from which parts are broken away. The cutting blades are slightly tapering away from each other in the cutting direction and are forming part of a suction mouth.

If the apparatus is intended for cutting ice confection products it may be advantageous to use heated cutting blades, thereby preventing or minimising adhesion, suitable temperatures being from 40 to 80° C and preferably from 50 to 70° C.

For heating, several systems are available, such as internal heating by electrical heating or circulating heated fluid through bores inside the cutting blades and external heating by radiant heat.

## Claims

1. A method for cutting an elongated strand (2) of a soft fluid confection material such as ice cream, which is lying on a conveyor belt (3), into separate portions by forcing a cutting means (5,7) into the strand (2) and thereafter removing it, characterised in that two cutting blades (5) in generally parallel directions are forced into the strand (2) at a distance which is small as compared with the length of each portion and the material between these blades (5) is removed from the conveyor belt (3) either simultaneously with these cutting means (5,7) or before their removal.

2. A method according to claim 1, characterised in that the material between the cutting blades (5) is removed by suction.

3. An apparatus for cutting an elongated strand (2) of a soft confection material comprising an elongate conveyor belt (3), an extrusion means (1) for extruding an elongated strand (2) of soft confection material onto the conveyor belt (3) and a cutting means (5,7) movable in a direction transverse to the length of the conveying means (3) characterised in that the cutting means (5,7) comprises a pair of generally parallel cutting blades (5) and that means are arranged for removing material from the conveyor belt (3) between the cutting blades (5).

4. An apparatus according to claim 3, characterised in that suction means (8,9) are arranged for removing material from the conveyor belt (3) between the cutting blades (5).

5. An apparatus according to claim 3 or 4, characterised in that the cutting blades (5) form part of a suction mouth of the suction means (8,9).

## Revendications

1. Procédé pour couper un cordon allongé (2) de confiserie molle, telle qu'une crème glacée, qui repose sur un tapis transporteur (3), en portions séparées en forçant un moyen de coupe (5,7) dans le cordon (2) puis en l'enlevant, caractérisé par le fait que l'on force deux lames de coupe (5), selon des directions de façon générale parallèles, dans le cordon (2) à une distance faible en comparaison de la longueur de chaque portion et par le fait que l'on enlève du tapis transporteur (3) la longueur de confiserie située entre ces lames (5), soit en même temps que ces moyens de coupe (5,7), soit avant leur enlèvement.

2. Procédé selon la revendication 1, caractérisé par le fait que l'on enlève par aspiration la longueur de confiserie située entre les lames de coupe (5).

3. Appareil pour couper un cordon allongé (2) de confiserie molle, comportant un tapis transporteur allongé (3), des moyens d'extrusion (1) pour extruder un cordon allongé (2) de confiserie molle sur le tapis transporteur (3) ainsi que des moyens de coupe (5,7) mobiles dans une direction transversale à la longueur des moyens de transport (3), caractérisé par le fait que les moyens de coupe (5,7) sont constitués d'une paire de lames de coupe (5), de façon générale parallèles, et par le fait que des moyens sont prévus pour enlever du tapis transporteur (3) la longueur de confiserie située entre les lames de coupe (5).

4. Appareil selon la revendication 3, caractérisé par le fait que des moyens d'aspiration (8,9) sont prévus pour enlever du tapis transporteur (3) la longueur de confiserie située entre les lames de coupe (5).

5. Appareil selon la revendication 3 ou 4, caractérisé par le fait que les lames de coupe (5) forment une partie d'une embouchure d'aspiration des moyens d'aspiration (8,9).

## Patentansprüche

1. Verfahren zum Schneiden eines langgezogenen Stranges aus einem weichfließenden Süßwarenmaterial, wie z.B. Eiscreme, der auf einem Förderband (3) liegt, in getrennte Portionen, indem eine Schneideinrichtung (5, 7) in den Strang (2) getrieben und danach entfernt wird, dadurch gekennzeichnet, daß zwei Schneidklingen (5) in im allgemeinen parallelen Richtungen in einem Abstand, welcher verglichen mit der Länge jeder Portion klein ist, in den Strang (2) getrieben werden und das Material zwischen diesen Klingen (5) entweder gleichzeitig mit diesen Schneidmitteln (5, 7) oder vor deren Entfernen vom Förderband (3) entfernt wird.

2. Verfahren nach Anspruch 1, dadurch gekennzeichnet, daß das Material zwischen den Schneidklingen (5) durch Saugen entfernt wird.

3. Vorrichtung zum Schneiden eines langgezogenen Stranges (2) aus einem weichen Süßwarenmaterial, welche Vorrichtung ein langgezogenes Förderband (3), eine Extrusionseinrichtung (1) zum Extrudieren eines langgezogenen Stranges (2) aus weichem Süßwarenmaterial auf das Förderband (3) und eine Schneideinrichtung (5, 7) aufweist, welche in einer quer zur Länge der Fördereinrichtung (3) verlaufenden Richtung bewegbar ist, dadurch gekennzeichnet, daß die Schneideinrichtung (5, 7) ein Paar von im allgemeinen parallelen Schneidklingen (5) aufweist und daß Mittel vorgesehen sind um, Material vom Förderband (3) zwischen den Schneidklingen (5) zu entfernen.

4. Vorrichtung nach Anspruch 3, dadurch gekennzeichnet, daß zum Entfernen von Material vom Förderband (3) zwischen den Schneidklingen (5) eine Saugeinrichtung (8, 9) angeordnet ist.

5. Vorrichtung nach Anspruch 3 oder 4, dadurch gekennzeichnet, daß die Schneidklingen (5) einen Teil eines Saugmundstückes der Saugeinrichtung (8, 9) bilden.

Fig.1.

Fig.2.